# EUROPEAN PATENT APPLICATION

(11) **EP 4 152 153 A1**
(43) Date of publication of application: **22.03.2023**
(21) Application number: 21198138.6
(22) Date of filing: 21.09.2021
(51) Int. Cl.: G06F 9/50, G06F 11/36, G06V 20/56

(54) **METHOD AND SYSTEM FOR EVALUATION AND DEVELOPMENT OF AUTOMATED DRIVING SYSTEM FEATURES**

(71) Applicant: Zenseact AB, 417 56 Göteborg (SE)
(72) Inventor: GYLLENHAMMAR, Magnus, 435 43 Pixbo (SE); ZANDÉN, Carl, 437 38 Lindome (SE); KHORSAND VAKILZADEH, Majid, 431 66 Mölndal (SE)
(74) Representative: Zacco Sweden AB

(57) **Abstract**

The present invention relates to methods and systems for allocating platform resources in a vehicle for development, evaluation, and/or testing of ADS features. The method comprises storing, during a time period, sensor data indicative of a surrounding environment of the vehicle in a data storage device of the vehicle, and obtaining data indicative of a set of platform constraints of the vehicle. The method further comprises obtaining data indicative of a set of requirements for each of a plurality of ADS features, obtaining data indicative of a priority scheme for the plurality of ADS features, and obtaining data indicative of a current scene or scenario in the surrounding environment of the vehicle. Furthermore, the method comprises generating, based on the platform constraints, the set of requirements, the priority scheme and the current scene or scenario, an arbitration signal indicative of a resource allocation of the platform of the vehicle to at least one of the plurality of ADS features.

## Description

### TECHNICAL FIELD

The present disclosure relates to methods and systems for performance evaluation and development of ADS features of a vehicle. In particular, some embodiments relate to an arbitration architecture for allocating resources for performance evaluation and development of ADS features of a vehicle.

### BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. Today, there is ongoing research and development within a number of technical areas associated to both the ADAS and Autonomous Driving (AD) field. ADAS and AD will herein be referred to under the common term Automated Driving System (ADS) corresponding to all of the different levels of automation as for example defined by the SAE J3016 levels (0―5) of driving automation, and in particular for level 4 and 5.

In a not too distant future, ADS solutions are expected to have found their way into a majority of the new cars being put on the market. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

Much of the current efforts for development of ADS features or functions revolves around safely launching a first system to the market. However, once that is achieved, it will be paramount to improve the system in a safe and efficient manner, both to achieve cost reductions as well as performance improvements. Generally, there are significant costs and efforts associated with the development and verification of safety of the ADS, especially related to field tests and the understanding of how the system behaves in traffic. Therefore, it is desirable to efficiently utilize the available resources on each vehicle, be it a fleet for development purposes (test vehicles) or a fleet of vehicles already launched in the market (production vehicles). An advantage of utilizing production vehicles to develop and/or verify new ADS features (e.g. new perception functions/features) is the large volume of available vehicles (and consequently the large volume of potential training data) as compared to purpose-built test vehicles.

Accordingly, it is desirable to be able to utilize the present hardware of the production platform in order to develop new or more performant ADS features using the same sensory outputs as present in the production platform. However, there still are technical challenges that need to be overcome since the production platforms is likely limited in all four of - available power - available computational power - data storage capacity - and available bandwidth for data transmission.

There is accordingly a need in the art for new solutions for facilitating development and verification of ADSs in order to continuously be able to provide safer and more performant systems.

### SUMMARY

It is therefore an object of the present invention to provide a method, a computer-readable storage medium, a system, and a vehicle comprising such a system, which alleviate all or at least some of the above-discussed drawbacks of presently known systems and methods.

This object is achieved by means of a method, a computer-readable storage medium, a system, and a vehicle comprising such a system as defined in the appended independent claims. The term exemplary is in the present context to be understood as serving as an instance, example or illustration.

According to a first aspect of the present invention, there is provided a method for allocating platform resources in a vehicle for development, evaluation, and/or testing of ADS features. The method comprises storing, during a time period, sensor data indicative of a surrounding environment of the vehicle in a data storage device of the vehicle, and obtaining data indicative of a set of platform constraints of the vehicle. The method further comprises obtaining data indicative of a set of requirements for each of a plurality of ADS features, obtaining data indicative of a priority scheme for the plurality of ADS features, and obtaining data indicative of a current scene or scenario in the surrounding environment of the vehicle. Furthermore, the method comprises generating, based on the platform constraints, the set of requirements, the priority scheme and the current scene or scenario, an arbitration signal indicative of a resource allocation of the platform of the vehicle to at least one of the plurality of ADS features.

According to a second aspect of the present invention, there is provided a (non-transitory) computer-readable storage medium storing one or more programs configured to be executed by one or more processors of a processing system (e.g. in-vehicle processing system), the one or more programs comprising instructions for performing the method according to any one of the embodiments disclosed herein. With this aspect of the invention, similar advantages and preferred features are present as in the previously discussed first aspect of the invention.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

In accordance with a third aspect of the present invention there is provided a system for allocating platform resources in a vehicle for development, evaluation, and/or testing of ADS features. The system comprises control circuitry and an arbitration module. The control circuitry is configured to store, during a time period, sensor data indicative of a surrounding environment of the vehicle in a data storage device of the vehicle. The arbitration module is configured to obtain data indicative of a set of platform constraints of the vehicle, and to obtain data indicative of a set of requirements for each of a plurality of ADS features. The arbitration module is further configured to obtain data indicative of a priority scheme for the plurality of ADS features, and to obtain data indicative of a current scene or scenario in the surrounding environment of the vehicle. Furthermore, the arbitration module is configured to generate, based on the platform constraints, the set of requirements, the priority scheme and the current scene or scenario, an arbitration signal indicative of a resource allocation of the platform of the vehicle for at least one of the plurality of ADS features. With this aspect of the invention, similar advantages and preferred features are present as in the previously discussed first aspect of the invention.

According to a fourth aspect of the present invention, there is provided a vehicle comprising a set of vehicle-mounted sensors configured to monitor a surrounding environment of the vehicle. The vehicle further comprises a system for allocating platform resources in a vehicle for development, evaluation, and/or testing of ADS features according to any one of the embodiments disclosed herein. With this aspect of the invention, similar advantages and preferred features are present as in the previously discussed first aspect of the invention.

An advantage of some embodiments is that the available platform resources are allocated in an optimised manner to supply the required development resources to multiple ADS features that are currently under development.

An advantage of some embodiments is that the utilization of the (limited) production platform resources for development of new ADS features is increased.

An advantage of some embodiments is that targeted development of ADS features is achievable and the overall amount of data that needs to be stored and transmitted is reduced.

An advantage of some embodiments is that the development of ADS features can be done in a timely and cost-effective manner as multiple developers or development teams can be provided with access to "shadow mode" testing in production vehicles.

An advantage of some embodiments is that the only scenes/scenarios that are of value for development/evaluation/testing of ADS features are considered wherefore the power consumption of the production platform can be reduced as non-relevant scenes/scenarios are disregarded.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the invention will appear from the following detailed description, reference being made to the accompanying drawings, in which:
Fig. 1 is a schematic block diagram representation of a system for allocating platform resources in a vehicle for development, evaluation, and/or testing of ADS features in accordance with some embodiments.
Fig. 2 is a series schematic top-view illustrations of a vehicle moving a road portion towards an external object.
Fig. 3 is a schematic flow diagram representation of a method for allocating platform resources in a vehicle for development, evaluation, and/or testing of ADS features in accordance with some embodiments.
Fig. 4 is a schematic flow diagram representation of a method for developing, evaluating, and/or testing of ADS features in accordance with some embodiments.
Fig. 5 is a schematic process chart of a method for allocating platform resources in a vehicle for development, evaluation, and/or testing of ADS features in accordance with some embodiments.
Fig. 6 is a schematic illustration of a method for training and using a clustering algorithm for generating an arbitration decision for allocating platform resources in a vehicle for development, evaluation, and/or testing of ADS features in accordance with some embodiments.
Fig. 7 is a schematic side-view of a vehicle comprising a system for allocating platform resources in a vehicle for development, evaluation, and/or testing of ADS features in accordance with some embodiments.

### DETAILED DESCRIPTION

In the following detailed description, embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), Field Programmable Gate Arrays (FPGA) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

As mentioned, it is desirable to be able to utilize the present hardware of the production platform in order to develop new or more performant ADS features using the same sensory outputs as present in the production platform. However, there still are technical challenges that need to be overcome since the production platform is likely limited in all four of - available power - available computational power - data storage capacity - and available bandwidth for data transmission. Moreover, a large portion of the situations or scenarios that the vehicle is exposed to is not likely to yield any new information or data to aid the further development of the algorithms/models used by the perception system of the ADS. However, ensuring that the situations that are providing new information are leveraged, may be important in order to achieve an efficient development process of various ADS features, and in particular of ADS perception features (such as e.g. object detection, object classification, free-space estimation, drivable-area estimation, and so forth).

An "ADS feature" may in the present context be understood as an ADS function such as e.g. an object detection algorithm, an object classification algorithm, a free-space estimation algorithm, a lane tracking algorithm, a road edge tracking algorithm, an object motion-prediction algorithm, a free-space estimation algorithm, drivable-area estimation algorithm, and so forth. "Free-space estimations" may be understood as a determination of free-space areas i.e. estimates of areas absent of external objects (static and dynamic objects). One can consider an estimation of "driveable area" in an analogous fashion, where in addition to the estimation of areas absent of objects (as in the case of free space) the "driveable area" estimation also includes the presence of a road surface.

Some embodiments provide an architecture or platform for where the evaluation and/or learning of ADS features can be done in open loop (either in the vehicle directly - also known as shadow-mode) or retroactively if the input data is available. The present invention provides a means to increase the efficiency in the development of a plurality of ADS features under the constraints of the production platform. In particular, some embodiments provide methods and systems for modularised development (e.g. evaluation and learning/training) for the applicable ADS features to leverage the production platform in the most efficient and effective manner, with respect to the development needs of the features, whilst accounting for the limitations of the platform. It should be noted that the embodiments as disclosed herein need not be limited to perception features but that any relevant ADS feature that consumes data made available by the production platform may be possible to evaluate in open loop in accordance with the teachings herein.

Moreover, collection and curation of data for development, evaluation and testing purposes is arguably one of the most cost-intensive parts of realising performant ADS features. By using vehicles already at the hands of customers (herein referred to as production vehicles) to provide this data, one can both alleviate the need for a large fleet of dedicated development vehicles as well as make the most out of the available resources present in the production vehicles (i.e. the production platform). However, due to the limitations of the production platform, and when considering that there will likely be several ongoing development efforts for new or improved ADS features at the same time, it will be impossible to allow all of these features to collect data, be evaluated or improved simultaneously. Accordingly, some embodiments as disclosed herein provide a solution for efficiently deciding which ADS feature(s) should be allocated resources for development, testing or validation at any given time.

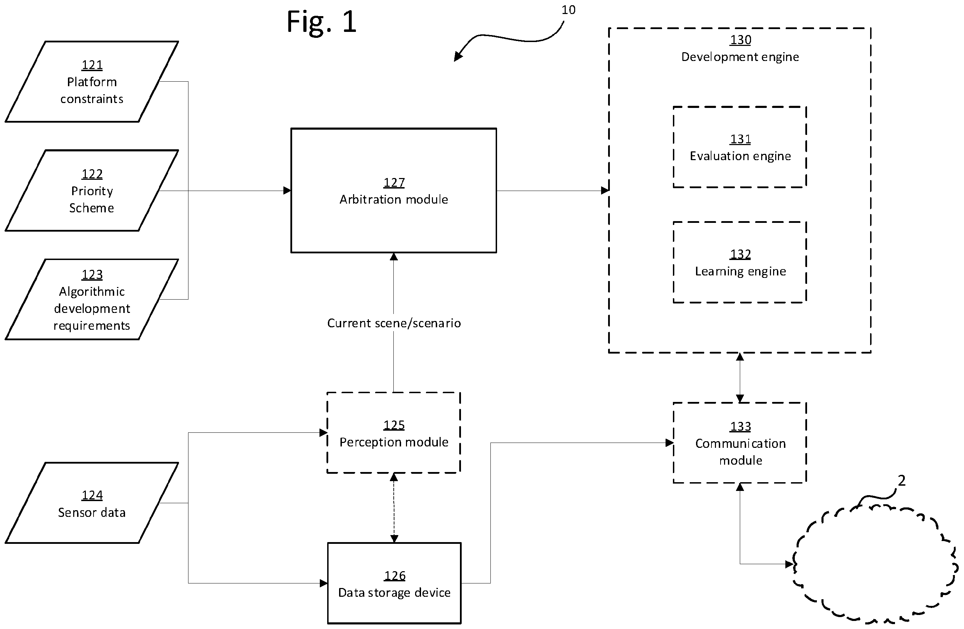

Fig. 1 is schematic block diagram representation of a system 10 for allocating platform resources in a vehicle for development, evaluation and/or testing of ADS features in accordance with some embodiments. In particular, the system 10 is suitable for allocating platform resources in a vehicle for development, evaluation and/or testing of perception features or functions for ADS-equipped vehicles.

In short, the system 10 is fed with the platform constraints 121, the algorithmic development requirements 123 for each ADS feature, the development priorities (i.e. priority scheme) 122 among the ADS feature, as well as the sensor data 124 indicative of the current scene/scenario around the vehicle. The system 10 has an arbitration module 27 (which could be of varying complexity, as exemplified later) that uses these inputs to supply a decision on which ADS features should be allocated which resources of the vehicle platform. For example, a first ADS feature (e.g. object classification algorithm) could be allocated resources to transmit the buffer of input data to be used for off-board developments, a second ADS feature (e.g. lane-marker tracking algorithm) is allocated for in-vehicle evaluation, whereas a third ADS feature (e.g. a free-space estimation algorithm) is allocated resources to conduct in-vehicle learning.

In more detail, the system 10 comprises control circuitry configured to store, during a time period, sensor data 124 indicative of a surrounding environment of the vehicle. The term "sensor data" is herein to be interpreted broadly, and may comprise raw sensor data and/or processed sensor data (e.g. object-level data) obtained from a perception module 125 of the ADS (i.e. perception data). In other words, the stored sensor data may for example be detected objects or objects' states and/or vehicle localization, and/or statistical and physical model predictions of future states, derived continuously and/or intermittently from a first time point T1 to a second time point T2. The sensor data may be stored in a data storage device 126, such as a data buffer. The time period - and correspondingly the length of the optional data buffer - may be of any arbitrary size deemed feasible, e.g. in consideration of data capacity restraints and/or characteristics of the ADS, and may for instance range from under a second up to several minutes, or more preferred, from a few seconds up to less than a minute.

The term "storing" a range of data may refer to "storing in one or more memories", "storing on-board said vehicle", "storing in one or more memories on-board said vehicle", and/or "storing digitally and/or electronically" a range of data, and further to "collecting" and/or "obtaining" a range of data. The term "range" of data, on the other hand, may refer to "amount", "series", "continuous and/or intermittent flow" and/or "collection" of data, whereas "data" may refer to "continuously and/or intermittently collected data". Furthermore, the term "perception" data may refer to "surroundings assessment" data, "sensory" data and/or "temporal dependencies" data, whereas "data" may refer to "information" and/or "estimates". The phrase storing "during" a time period may refer to storing "for" a time period, whereas time period "ranging" from a first time point to a second time point may refer to time period "extending" and/or "taking place" from a first time point to a second time point. "Time period" may refer to "predeterminable time period" and/or "predetermined time period". "Time point", on the other hand, may refer to "point in time", whereas "from a first time point to a second time point" may refer to "from a first time point to a subsequent second time point".

Further, the system 10 comprises an arbitration module 127 configured to obtain data 121 indicative of a set of platform constraints of the vehicle, obtain data 123 indicative of a set of requirements for each of a plurality of ADS features, and obtain data 122 indicative of a priority scheme for the plurality of ADS features. In some embodiments, the set of platform constraints include at least one of, available power, available computational resources, available data storage capacity, and available bandwidth for data transmission. In some embodiments, the set of requirements for each of the plurality of ADS features comprises an estimated power consumption, estimated computational resource need, an estimated data storage need, and an estimated bandwidth need. In some embodiments, the priority scheme comprises a predefined development priority of each ADS feature relative to the other ADS features of the plurality of ADS features.

The arbitration module is further configured to obtain data indicative of a current scene or scenario in the surrounding environment of the vehicle. A "scenario" may be understood as one or more momentary scenes at one or more points in time during the time period including the positions of detected objects, object classes/types, positions of lane markers, extensions of lane markers, free-space detections, and/or trajectories of detected objects. It should be noted that this list merely serves to exemplify the parameters included in a "scenario" and may include other parameters detectable by the vehicle's perception module 125 as readily understood by the skilled person in the art.

Still further, the arbitration module 127 is configured to generate, based on the platform constraints, the set of requirements, the priority scheme and the current scene or scenario, an arbitration signal indicative of a resource allocation of the platform of the vehicle for at least one of the plurality of ADS features.

Accordingly, the information about (or conditions of) the current scene or scenario is used to determine which of the ADS features will gain the most from being provided the data from this situation (being evaluated in the current situation). This may for example be determined by comparing the data previously used to develop the algorithm(s) with the new scene or scenario. The information from the current scene or scenario provided to the arbitration module 127 can be either on the format of the input data used by the ADS features' algorithm(s) (in practice the output of the production sensors or subset thereof) or any other type of measurements that can be used to determine the most fruitful resource allocations, e.g. geographic, road conditions, weather, ego vehicle velocity, etc.

Further, depending on the type of ADS feature that is being developed, it will require different sets of platform resources. Moreover, ADS features, e.g. ADS perception features/functions, targeting improvements (e.g. in terms of computational footprint, execution time, etc.) of detection abilities present in the production platform may be evaluated and/or updated online (i.e. in the vehicle). On the other hand, some ADS features require training data that cannot be "annotated" by comparison with the production outputs and will therefore require off-board processing in order to update the ADS features. However, these may nevertheless be evaluated online by deriving a performance metric using the production outputs.

Thus, there are herein proposed three different possible tracks for an ADS feature - (1) transmission of data for off-board processing and updates - (2) online evaluation - and (3) online updating e.g. in accordance with a federated learning scheme. Additionally, in (2) one could consider - (i) only sending the evaluation results - or (ii) sending the entire input data (used in the evaluation) for off-board processing if e.g. a certain threshold is met in the evaluation. Moreover, in some embodiments, the ADS features discussed herein are limited to only using the sensor data present in the production platform, i.e. the data originating from the vehicle-mounted sensors (production sensors), for executing the methods as disclosed herein. However, as the skilled person readily understands the ADS feature may of course utilize other data sources for various purposes, such as e.g. remote servers for obtaining weather forecasts, accident or hazard data, road works, and so forth.

In accordance with some embodiments, the arbitration signal is output to a development engine/module 130 of the vehicle. The development engine/module 130 may comprise an evaluation engine/module 131 configured to evaluate, in accordance with the resource allocation, an output of at least one ADS feature using at least a portion of stored sensor data as input. Moreover, the development engine/module 130 may comprise a learning engine/module 132 configured to update, in accordance with the resource allocation, at least one ADS feature using at least one portion of the stored sensor data as input. Furthermore, in some embodiments, the control circuitry is configured to transmit at least a portion of the stored sensor data 124 to a remote entity for offline processing. The transmission of data may for example be performed by a communication module 133 via an external communication network, such as a cellular network (e.g. 4G, NR/5G).

In reference to the "second track" mentioned in the foregoing, the evaluation process may for example be conducted in accordance with the teachings of European Patent Application No. EP19204278.6, titled "PERFORMANCE MONITORING AND EVALUATION OF A VEHICLE ADAS OR AUTONOMOUS DRIVING FEATURE", incorporated herein by reference. Moreover, the online updating process may for example be conducted in accordance with the teachings of European Patent Application No. EP21158017.0 titled "PLATFORM FOR PERCEPTION SYSTEM DEVELOPMENT FOR AUTOMATED DRIVING SYSTEMS", incorporated herein by reference.

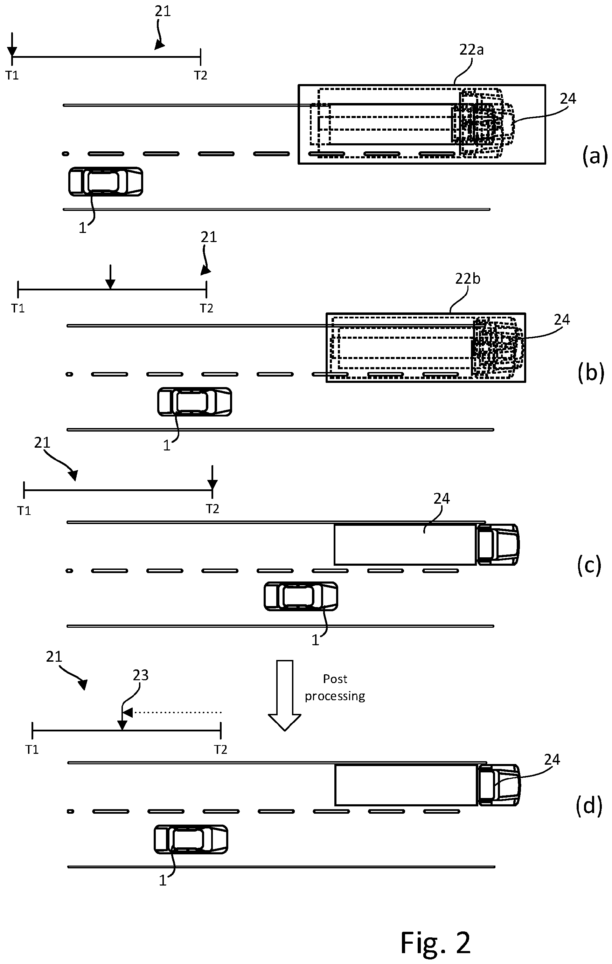

In short, for the evaluation process the output of the evaluated ADS feature is compared with a "production ground truth" (may also be referred to as a "baseline worldview"), i.e. a post-processed version of the ADS worldview. The "third track" mentioned in the foregoing (i.e. updating process) is based on a similar approach, where the post-processed worldview, i.e. the "production ground truth" or "baseline worldview" may be used as "annotated" data or a supervisory signal in a self-supervised training scheme. The post-processing is further elucidated and exemplified in reference to Fig. 2

More specifically, Fig. 2 depicts a series (a) - (d) of schematic top-view illustrations of a vehicle 1 moving a road portion towards an external object 24. Each illustration is associated with a point in time within the time period 21 ranging from a first moment in time T1 to a second moment in time T2.

In the first illustration (a) the vehicle 1 (may also be referred to as ego-vehicle 1) is moving towards an external object, here in the form of a truck 24, that is traveling in the same direction on an adjacent lane on the road portion. However, due to the distance to the truck 24, the vehicle's perception system/module may not be able to determine, with a sufficiently high level of accuracy, the position of the external object, and to classify it as a truck. This is indicated by the box 22a enclosing the truck 24 and the "blurred" representation of the truck 24, which serve to schematically indicate the "uncertainties" of the detection and classification.

At a subsequent moment in time, i.e. illustration (b) of Fig. 2, the vehicle 1 is closer to the external object, and the uncertainties regarding the external object's 24 position and class/type are reduced, as indicated by the reduced size of the box 22b and the converging "blur" as compared to the situation in illustration (a).

At yet another subsequent moment in time, i.e. illustration (c) of Fig. 2, the vehicle's 1 perception system/module is able to accurately determine the external object's 2 position and classify it as a truck 2. More specifically, the ego-vehicle 1 is now sufficiently close to the truck 2 to be able to classify it and estimate the truck's position on the road with a higher level of accuracy as compared to when the ego-vehicle 1 was located further away from the truck.

Then, by means of a suitable filtering technique and based on the temporal development of the "scenario", one is able to establish a "worldview" at an intermediate point 23 in time between T1 and T2, as indicated in the bottom illustration in Fig. 2, i.e. in illustration (d) of Fig. 2. In more detail, the filtering may for example be based on the temporal development of the trajectories, positions, etc. in combination with predefined models (e.g. motion models) of the vehicle 1 and external objects 2. This established worldview may subsequently used as a "ground truth" for training and/or validation of various perception output, and in particular for training and/or validation of the output obtained from one or more ADS features herein. Thus, in some embodiments, the post-processed worldview forms a ground truth for the output of the ADS feature(s).

In accordance with some embodiments, the time period ranges from a first time point to a second time point, and the perception data output by the perception system of the ADS is stored during the time period. Accordingly, the step of post-processing perception data may comprise determining, based on post-processing a portion of the perception data ranging back from the second time point to an intermediate time point between the first time point T1 and second time point T2 the training data indicative of a bird's eye view of the surrounding environment of the vehicle. The post-processed perception data is accordingly conditional on the portion of the perception data. Moreover, in accordance with some embodiments, the post-processing of the portion of the perception data comprises running the portion of the perception data through a backwards filter. Here, the backwards filter is configured to align a set of perceptive parameters of the perception data at the intermediate time point based on a development of the state(s) of the set of perceptive parameters from the intermediate time point to the second time point T2. The term "perceptive parameters" may for example include one or more of object classes, object positions/bounding boxes, road edge estimations, road geometry estimations, etc.

In other words, with the increased knowledge of vehicle 1 surroundings as time passes from the intermediate time point 23 to the second time point T2 and by analyzing data in reverse temporal direction, one may be able to determine, with a higher level of accuracy, the "state" (i.e. classes, positions, trajectories, etc.) of the objects in the vehicle's 1 surroundings at the intermediate time point, than it was able to do at "run-time". In more detail, the post processing may for example comprise running the perception data through a backwards filter configured to align e.g. the objects current and predicted future states with what happened in the future - i.e. from the intermediate time point to the second time point T2. The post-processing may include further processing steps than running it through a backwards filter. More specifically, the post-processing may include fusion of data from various sensors, as well as applying backward and forward filtering on the fused information. Suitable filters for this purpose may for example be Particle filters or different types of Kalman filters (e.g. extended Kalman filters).

Accordingly, when the post-processed worldview has been obtained for a specific time period, one can compare a corresponding output (i.e. an output based on input data originating from the same time period) from one or more ADS features that are currently "under development" or otherwise in need of an update/evaluation depending on the generated arbitration signal. However, the post-processing of perception data is not an essential requirement for performing the evaluation or update process, as in some cases it is enough to just use the output from the production platform's perception module/system as a comparison with the subject ADS feature's output.

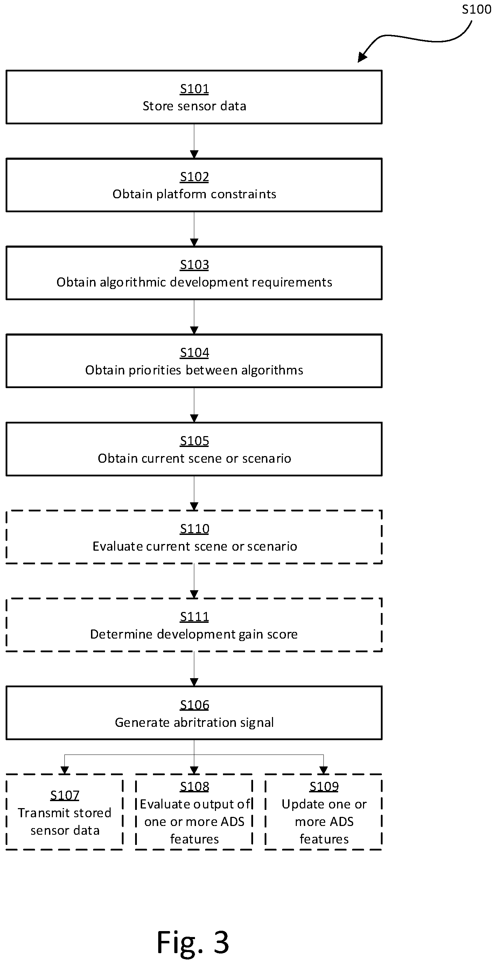

Moving on, Fig. 3 depicts a schematic flowchart representation of a method S100 for allocating platform resources in a vehicle for development, evaluation, and/or testing of ADS features in accordance with some embodiments. The method S100 comprises storing S101, during a time period, sensor data indicative of a surrounding environment of the vehicle in a data storage device of the vehicle. The stored S101 sensor data may comprise raw sensor data output by one or more vehicle-mounted sensors such as e.g. monocular cameras, stereoscopic cameras, LiDAR devices, RADAR devices, ultrasonic devices, and so forth. Additionally, or alternatively, the stored S101 sensor data may comprise processed sensor data (e.g. output from a perception module/system of the ADS).

Further, the method S100 comprises obtaining S102 data indicative of a set of platform constraints of the vehicle, and obtaining S103 data indicative of a set of requirements for each of a plurality of ADS features (may also be referred to as algorithmic development requirements). In some embodiments, the set of platform constraints include at least one of, available power, available computational resources, available data storage capacity, and available bandwidth for data transmission. In some embodiments, the set of requirements for each of the plurality of ADS features comprises an estimated power consumption, estimated computational resource need, an estimated data storage need, and an estimated bandwidth need. The term obtaining is herein to be interpreted broadly and encompasses receiving, retrieving, collecting, acquiring, and so forth.

The method S100 further comprises obtaining S104 data indicative of a priority scheme for the plurality of ADS features. In some embodiments, the priority scheme comprises a predefined development priority of each ADS feature relative to the other ADS features of the plurality of ADS features. More specifically, the priority scheme may be understood as a constraint controlling a priority of each of the plurality of ADS features for being allocated platform resources of the vehicle for development, evaluation and/or testing of ADS features. Thereby one can dynamically control the priority to develop/evaluate/test the ADS features.

Still further, the method S100 comprises obtaining S105 data indicative of a current scene or scenario (i.e. the scene or scenario of the time period) in the surrounding environment of the vehicle. The current scene or scenario may for example be derived from sensor data generated during the time period by a perception module/system of the vehicle. In a more illustrative example, a particular scene or scenario may for example be a highway or controlled-access motorway in a specific weather condition (e.g. heavy rain) at a specific time of day (e.g. at night). Similarly, a particular scene or scenario may for example be an urban environment with sunny conditions at rush-hour traffic. Another example of a scene or scenario may be a rural road in day-light with wild animals crossing the road. Yet another example of a scene or scenario may be when an external vehicle exhibits aggressive behaviour (e.g. overtaking the ego-vehicle in dense traffic and cutting in front of the ego-vehicle with low margins). A scenario may be understood as a temporal development of a plurality of "scenes".

Further, the method S100 comprises generating S106, based on the obtained S102 platform constraints, the obtained S103 set of requirements, the obtained S104 priority scheme and the obtained S105 current scene or scenario, an arbitration signal indicative of a resource allocation of the platform of the vehicle to at least one of the plurality of ADS features.

Then, in accordance with some embodiments, the method S100 further comprises, based on the resource allocation indicated by the arbitration signal, performing at least one of:
- Transmitting S107 at least a portion of the stored sensor data to a remote entity for offline processing.
- Evaluating S106, in accordance with the resource allocation, an output of at least one ADS feature using at least a portion of stored sensor data as input.
- Updating/Training S109, in accordance with the resource allocation, at least one ADS feature using at least one portion of the stored sensor data as input.

Moreover, in accordance with some embodiments, the method S100 further comprises evaluating S110 the current scene or scenario in order to determine a score indicative of a potential development gain of using at least a portion of the stored sensor data for each of the plurality of ADS features. The evaluation S110 of the current scene or scenario may for example be performed by using a heuristic algorithm or a clustering algorithm. The method S100 may accordingly further comprise generating S106, based on the obtained S102 platform constraints and the obtained S103 set of requirements, the arbitration signal indicative of a resource allocation of the platform of the vehicle for at least one of the plurality of ADS features in accordance with the determined score and the obtained S104 priority scheme.

A heuristic arbitrator (i.e. rule-based arbitrator) may for example be realized by setting up a process where the arbitration module runs a heuristic evaluation for each ADS feature in accordance with the obtained priority scheme. In more detail, a first step may be to check if the obtained scene/scenario provides any new or otherwise valuable data for evaluating/developing/testing a "first" ADS feature according to the priority scheme. This check of the obtained scene or scenario may for example be performed by setting up a series of subprocesses where the current scene or scenario is evaluated by forming a series of question and deriving a score indicative of the potential development gain. For example:
- Is the scene/scenario appropriate for evaluating/training the subject ADS feature?"
   ∘ In more detail, if the subject ADS feature is a lane tracing algorithm, and there are no visible lane markers in the current scene/scenario, then the current scene/scenario may be considered inappropriate.
- Does the scene/scenario provide new information that the ADS feature has not yet been exposed to?
- Is the data quality above a threshold?
   ∘ In more detail, some data quality metrics may for example be noise levels, obstructions, and so forth.

If the answer to the "scene/scenario check" is no, the process loops back and selects the next ADS feature according to the priority scheme. However, if the answer is yes, the next step may be to check if the ADS feature requires storage of inputs (e.g. sensor data), and if the answer is yes the process may proceed to check if the required resources are available. If the necessary storage resources are available then the inputs are stored and the process may loop back to select the next ADS feature according to the priority scheme and run the process from the beginning. If the required storage resources would not be available, the process may also loop back to select the next ADS feature according to the priority scheme.

Next, if the ADS feature did not require storage of inputs, the process may continue to check if there are platform resources available training the underlying model/algorithm of the ADS feature, and if the learning/training resources are available the learning/training process may be initiated and executed. However, if there are no platform resources available for learning/training, the process may proceed to checking if there are platform resources available for evaluating the ADS feature, and if so, the evaluating process may be initiated and executed. However, if there are no platform resources available for evaluating the ADS feature, the process may loop back to select the next ADS feature according to the obtained priority scheme.

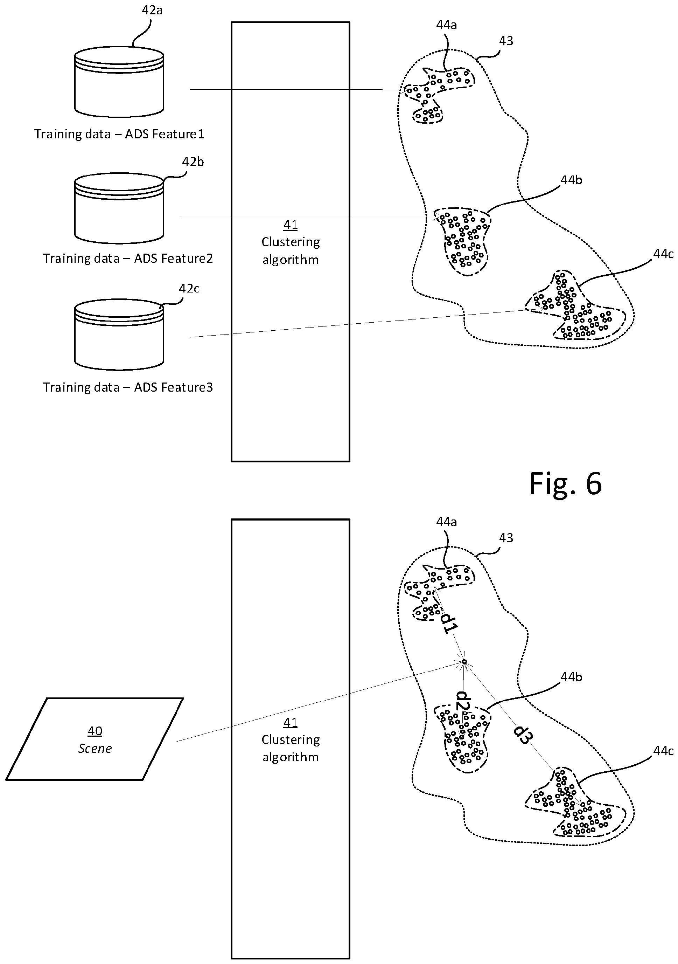

Fig. 6 is a schematic illustration of how a clustering algorithm 41 is used to encode the training data from each ADS feature and subsequently use the distance d1, d2, d3 between these training data clusters and the current scene or scenario as a predictor for training impact (i.e. score indicative of the potential development gain).

The top part of Fig. 6 schematically depicts how the clustering algorithm 41 is configured to cluster the training data 42a-c used for training the algorithms of each ADS feature. The clustering algorithm 41 may be any suitable algorithms as readily understood by the skilled person in the art such as e.g., a K-means clustering algorithm, a mean-shift clustering algorithm, a Density-Based Spatial Clustering of Applications with Noise (DBSCAN) clustering algorithm, and so forth.

Once the clustering algorithm 41 has formed the "training clusters" (may also be referred to as sub-clusters) 44a-c for the plurality of ADS features, it can process a new scene or scenario 40 and place it in the same "cluster space" 43. Then, in some embodiments, the score indicative of the potential development gain is determined based on a position of the placed current scene or scenario 40 in the clustering space relative to each sub-cluster 44a-c (see bottom part of Fig. 6). In other words, the distances d1-d3 may be used to determine the score indicative of the potential development gain, where a smaller distance indicates a higher development gain than a larger distance. It should be noted that this is merely one example of how to configure a clustering algorithm for evaluating the current scene. In some embodiments, a larger distance may indicate a higher development gain than a smaller distance. For example, if two ADS features share a common operational design domain (ODD), but the first of those two features has not had any "exposure" to snow conditions, while the second ADS features has already been exposed to snow. In such cases, there would be a "larger" distance to the first ADS feature's sub-cluster than to the second ADS feature's sub-cluster, but the "snowy" scene would likely be more valuable (i.e. have a higher potential development gain) for the first ADS feature. An Operational design domain (ODD) is to be understood as a description of the operating conditions in which an automated or a semi-automated driving system (i.e. AD or ADAS) is designed to function, including, but not limited to, geographic, roadway (e.g. type, surface, geometry, edges and markings), environmental parameters, connectivity, surrounding objects, traffic parameters, and speed limitations.

In other words, the step of evaluating the current scene or scenario may accordingly comprise processing, by means of the clustering algorithm 41, the current scene or scenario 40 in order to place the current scene or scenario 40 in a clustering space 43. The clustering space is indicative of sub-clusters (training clusters) 44a-c formed based on training data used for each ADS feature of the plurality of ADS features. Further, the method may comprise determining the score indicative of the potential development gain based on a position of the placed current scene or scenario in the clustering space 43 relative to each sub-cluster 44a-c.

Another example embodiment of an architecture for the arbitrator module is where one distinguishes between clustering of data related to the scene and an optimizing module to make the appropriate arbitration decision. The first part (clustering) may as mentioned be trained using the training data used for each of the ADS features (and their underlying algorithms) considered. When the clustering module is later exposed to new scenes or scenarios it may be configured to indicate which algorithm would gain the most from being exposed to this new scene (for example according to the clustering example given in the foregoing). The optimizing module may be on the other hand be configured to weigh this information together with the platform constraint, the development requirements and the priorities between the algorithms to provide an optimized arbitration decision. During training of the optimizing module, such a decision can then be evaluated towards the learning effects provided to each algorithm (for example by analysing the influence function of this input to each algorithm) and a cost function may subsequently be determined to train/update the optimizing module.

Further, in some embodiments the evaluation of the current scene or scenario is performed by a clustering algorithm and a heuristic algorithm. In other words, the clustering and rule-based logic may be combined to form the arbitrator. This may be useful in cases the ADS features share a common ODD and one could use a check to see if the current scene is a "new" scene for any of the ADS features in order to prioritize between the ADS features.

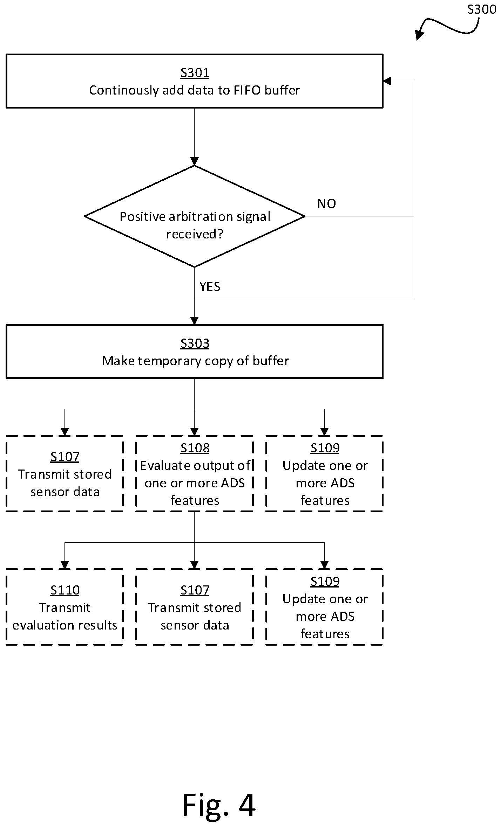

Moving on to Fig. 4, which depicts a schematic flow-chart representation of a sub-process S300 of a method for allocating platform resources in a vehicle for development, evaluation, and/or testing of ADS features in accordance with some embodiments. More specifically, Fig. 4 depicts the usage of a First-In First-Out (FIFO) buffer of sensor data to fulfil the above-mentioned three possible development tracks for ADS features.

The arbitration architecture as taught herein proposed to use the current scene or scenario as a means to decide on the allocation of platform resources even though some ADS features may need time for initialization as well as a convergence period. Therefore, in accordance with some embodiments, the sensor data is stored continuously S301 in a FIFO buffer (e.g. in the form of a fast access memory such as a Random Access Memory, RAM). The sensor data may be all of the sensor data generated on the vehicle platform. Thus, if an ADS feature is to be evaluated online (i.e. in the vehicle), the evaluation can start at the beginning of or from any appropriate (later) position in the FIFO buffer. Similarly, as the relevant data is present in the FIFO buffer, it can also be stored and transmitted for off-board processing without loss of required information. Moreover, in some embodiments, only a sub-portion of the data stored in the FIFO buffer (i.e. the data relevant for the development of the ADS feature) is transmitted and not the entire FIFO buffer.

Accordingly, the step of storing S101, during a time period, sensor data may comprise continuously storing S301 sensor data indicative of a surrounding environment of the vehicle in a FIFO buffer. Then, once a "positive" arbitration signal is received (i.e. an arbitration signal indicative of an instruction to perform a data transmission S107, an evaluation S108, an update process S109) for one or more ADS feature, the method further comprises making S303 a temporary copy of the FIFO buffer. Then, depending on the resource allocation indicated by the arbitration signal, executing one of the above-mentioned three different possible tracks for an ADS feature. Namely - (1) transmitting S107 data for off-board processing and updates - (2) evaluating S108 the output of one or more ADS feature - and (3) updating S109 one or more ADS features (or more specifically, updating the underlying model/algorithm of the ADS feature(s)). Additionally, as an extension to the second track (i.e. once the evaluation process S108 has been completed or otherwise stopped), in some embodiments, the method further comprises sending S110 the evaluation results and/or sending the entire input data (used in the evaluation) for off-board processing if e.g. a certain threshold is violated in the evaluation.

Moreover, in some embodiments, the updating S109 of the one or more ADS features, is performed (assuming there are platform resources available) after the one or more ADS features have evaluated S108. Thereby one effectively adds a "check" to see whether the current batch of data (i.e. the temporary copy of the buffer) would yield valuable updates before the data is processed with e.g. back-propagation (or similar training method). Thus, this "check" that is based on the evaluation S108 of the output of the ADS feature(s) allows for more efficient use of the platform resources.

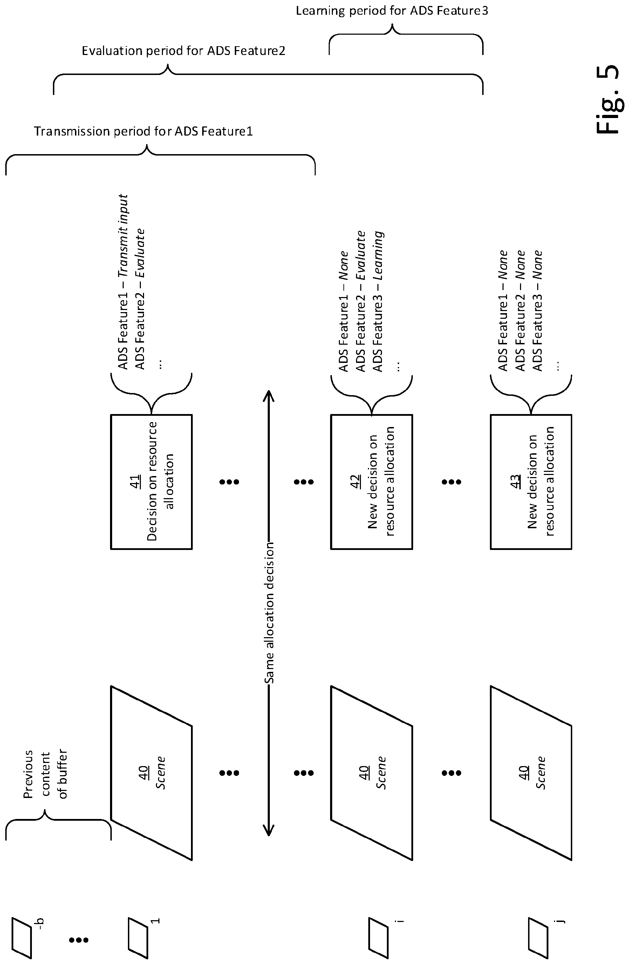

Fig. 5 is a schematic process chart of a method for allocating platform resources in a vehicle for development, evaluation, and/or testing of ADS features in accordance with some embodiments. In more detail, Fig. 5 depicts how the architecture handles multiple consecutive arbitration decisions over a time period.

Here, the first arbitration signal is indicative of a resource allocation of the platform of the vehicle for transmission of input data (e.g. sensor data) for a first ADS feature. Moreover, since all the necessary input data is readily available in the buffer, the

transmission/evaluation/update processes can be started at any time between the buffer start and the current time instance for a subject ADS feature. In the depicted example, the first arbitration signal (received at t₁) indicates a resource allocation for transmission of input data for a first ADS feature and an evaluation for a second ADS feature. As mentioned, since the necessary input data is buffered, the transmission and evaluation can be performed with data originating from any time between t_{-b} and t₁ for the first and second ADS features. Then, a second arbitration signal is received at time instance tᵢ, where the second arbitration signal indicates that the first ADS feature is to stop the transmission, the second ADS feature is to continue evaluation, and a third ADS feature is to be updated. As before, the updating process for the third ADS feature can be performed with data originating from any time between t_{-(b-i)} and tᵢ for the third ADS feature. Then, a third arbitration signal is received at time instance tⱼ indicating that none of the three ADS features have been allocated any platform resources.

Executable instructions for performing these functions are, optionally, included in a non-transitory computer-readable storage medium or other computer program product configured for execution by one or more processors.

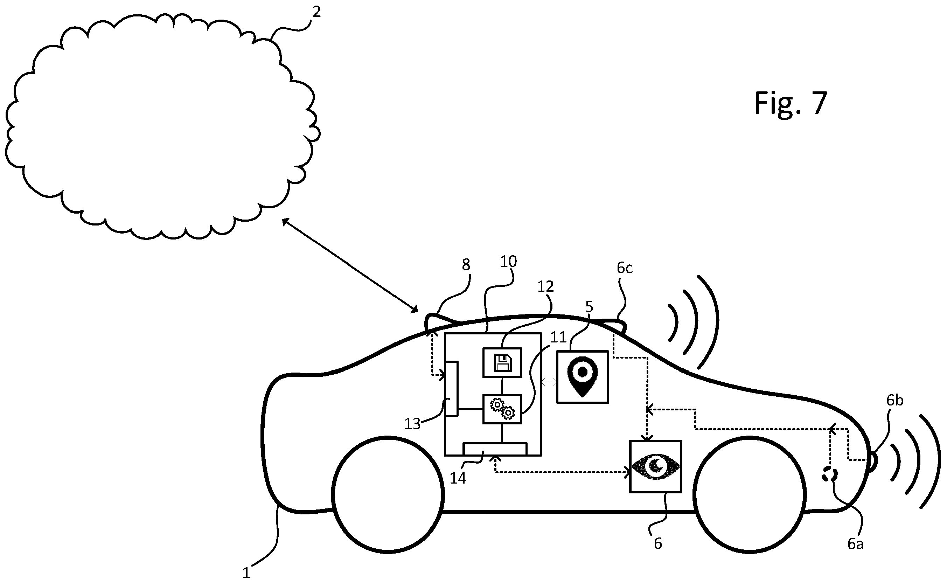

Fig. 7 is a schematic side-view illustration of a vehicle 1 comprising a system 10 for allocating platform resources in a vehicle for development, evaluation, and/or testing of ADS features in accordance with some embodiments. The vehicle 1 further comprises a perception system 6 (may also be referred to as perception module or perception block) and a localization system 5. A perception system 6 is in the present context to be understood as a system responsible for acquiring raw sensor data from on-board sensors 6a, 6b, 6c such as cameras, LIDARs and RADARs, ultrasonic sensors, and converting this raw data into scene understanding. The localization system 5 is configured to monitor a geographical position and heading of the vehicle, and may in the form of a Global Navigation Satellite System (GNSS), such as a GPS (or any other regional variant thereof). However, the localization system may alternatively be realized as a Real Time Kinematics (RTK) GPS in order to improve accuracy.

In more detail, the perception system/block 6 may refer to any commonly known system and/or functionality, e.g. comprised in one or more electronic control modules and/or nodes of the vehicle 1, adapted and/or configured to interpret sensory information - relevant for driving of the vehicle 1 - to identify e.g. obstacles, vehicle lanes, relevant signage, appropriate navigation paths etc. The exemplified perception system 6 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional surrounding detecting sensors 6a-c comprised in and/or provided on-board the vehicle 1. The surrounding detecting sensors 6a-c may be represented by any arbitrary sensors adapted to sense and/or perceive the vehicle's 1 surroundings and/or whereabouts, and may e.g. refer to one or a combination of one or more of radar, LIDAR, sonar, camera, navigation system e.g. GPS, odometer and/or inertial measurement units.

The system 10 comprises one or more processors 11, a memory 12, a sensor interface 13 and a communication interface 14. The processor(s) 11 may also be referred to as a control circuit 11 or control circuitry 11. The control circuitry 11 is configured to execute instructions stored in the memory 12 to perform a method for allocating platform resources in a vehicle for development, evaluation, and/or testing of ADS features according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

The control circuitry 11 is configured to store, during a time period, sensor data indicative of a surrounding environment of the vehicle in a data storage device of the vehicle. The system 10 further comprises an arbitration module configured to obtain data indicative of a set of platform constraints of the vehicle, and to obtain data indicative of a set of requirements for each of a plurality of ADS features. The arbitration module is further configured to obtain data indicative of a priority scheme for the plurality of ADS features, and to obtain data indicative of a current scene or scenario in the surrounding environment of the vehicle. Furthermore, the arbitration module is configured to generate, based on the platform constraints, the set of requirements, the priority scheme and the current scene or scenario, an arbitration signal indicative of a resource allocation of the platform of the vehicle for at least one of the plurality of ADS features. The arbitration module may be implemented by means of both hardware and software as readily understood by the skilled person in the art.

In accordance with some embodiments, the control circuitry 11 is further configured to based on the resource allocation indicated by the arbitration signal, perform at least one of:
- Transmit at least a portion of the stored sensor data to a remote entity for offline processing.
- Evaluate, in accordance with the resource allocation, an output of at least one ADS feature using at least a portion of stored sensor data as input.
- Update, in accordance with the resource allocation, at least one ADS feature using at least one portion of the stored data as input.

Further, the vehicle 1 may be connected to external network(s) 2 via for instance a wireless link (e.g. for retrieving map data, "global" updates of one or more ADS features, or updates of any schemes/requirements associated with the ADS features). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 and arbitration module (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 14 may also provide the possibility to acquire sensor data directly or via dedicated sensor control circuitry 6 in the vehicle. The communication/antenna interface 13 may further provide the possibility to send output to a remote location (e.g. remote operator or control centre) by means of the antenna 8. Moreover, some sensors in the vehicle may communicate with the system 10 using a local network setup, such as CAN bus, 12C, Ethernet, optical fibres, and so on. The communication interface 13 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data or perception data may be sent to an external system and that system performs the steps to evaluate the current scene or scenario. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent embodiments should be apparent for the person skilled in the art.

## Claims

1. A method (S100) for allocating platform resources in a vehicle for development, evaluation, and/or testing of ADS features, the method comprising:
storing (S101), during a time period, sensor data indicative of a surrounding environment of the vehicle in a data storage device of the vehicle;
obtaining (S102) data indicative of a set of platform constraints of the vehicle;
obtaining (S103) data indicative of a set of requirements for each of a plurality of ADS features;
obtaining (S104) data indicative of a priority scheme for the plurality of ADS features;
obtaining (S105) data indicative of a current scene or scenario in the surrounding environment of the vehicle;
generating (S106), based on the platform constraints, the set of requirements, the priority scheme and the current scene or scenario, an arbitration signal indicative of a resource allocation of the platform of the vehicle to at least one of the plurality of ADS features.

2. The method (S100) according to claim 1, wherein the method further comprises:
evaluating (S110) the current scene or scenario in order to determine (S111) a score indicative of a potential development gain of using at least a portion of the stored sensor data for each of the plurality of ADS features;
generating (S106), based on the platform constraints and the set of requirements, the arbitration signal indicative of a resource allocation of the platform of the vehicle for at least one of the plurality of ADS features in accordance with the determined score and the priority scheme.

3. The method (S100) according to claim 2, wherein the step of evaluating the current scene or scenario is performed by means of a heuristic algorithm.

4. The method (S100) according to claim 2 or 3, wherein the step of evaluating the current scene or scenario is performed by means of a clustering algorithm.

5. The method (S100) according to claim 4, wherein the step of evaluating the current scene or scenario comprises:
processing, by means of the clustering algorithm, the current scene or scenario in order to place the current scene or scenario in a clustering space (43), wherein the clustering space is indicative of sub-clusters (44a, 44b, 44c) formed based on training data (42a, 42b, 42c) used for each ADS feature of the plurality of ADS features;
determining the score indicative of the potential development gain based on a position of the placed current scene or scenario in the clustering space (43) relative to each sub-cluster.

6. The method (S100) according to any one of claims 1 ― 5, further comprising:
based on the resource allocation indicated by the arbitration signal, performing at least one of:
transmitting (S107) at least a portion of the stored sensor data to a remote entity for offline processing;
evaluating (S108), in accordance with the resource allocation, an output of at least one ADS feature using at least a portion of stored sensor data as input; and
updating (S109), in accordance with the resource allocation, at least one ADS feature using at least one portion of the stored sensor data as input.

7. The method (S100) according to any one of claims 1 ― 6, wherein the set of platform constraints include at least one of, available power, available computational resources, available data storage capacity, and available bandwidth for data transmission.

8. The method (S100) according to any one of claims 1 ― 7, wherein the set of requirements for each of the plurality of ADS features comprises an estimated power consumption, estimated computational resource need, an estimated data storage need, and an estimated bandwidth need.

9. The method (S100) according to any one of claims 1 ― 8, wherein the priority scheme comprises a predefined development priority of each ADS feature relative to the other ADS features of the plurality of ADS features.

10. A computer-readable storage medium storing one or more programs configured to be executed by one or more processors of an in-vehicle processing system, the one or more programs comprising instructions for performing the method according to any one of claims 1 -9.

11. A system (10) for allocating platform resources in a vehicle (1) for development, evaluation, and/or testing of ADS features, the system comprising:
control circuitry (11) configured to:
store, during a time period, sensor data (124) indicative of a surrounding environment of the vehicle in a data storage device (126) of the vehicle; and
an arbitration module (127) configured to:
obtain data indicative of a set of platform constraints (121) of the vehicle;
obtain data indicative of a set of requirements (123) for each of a plurality of ADS features;
obtain data indicative of a priority scheme (122) for the plurality of ADS features;
obtain data indicative of a current scene or scenario (40) in the surrounding environment of the vehicle;
generate, based on the platform constraints, the set of requirements, the priority scheme and the current scene or scenario, an arbitration signal indicative of a resource allocation of the platform of the vehicle for at least one of the plurality of ADS features.

12. The system according to claim 11, wherein the arbitration module (127) is further configured to:
evaluate the current scene or scenario (40) in order to determine a score indicative of a potential development gain of using at least a portion of the stored sensor data for each of the plurality of ADS features;
generate, based on the platform constraints and the set of requirements, the arbitration signal indicative of a resource allocation of the platform of the vehicle for at least one of the plurality of ADS features in accordance with the determined score and the priority scheme.

13. The system according to claim 11 or 12, wherein the control circuitry (11) is further configured to:
based on the resource allocation indicated by the arbitration signal, perform at least one of:
transmit at least a portion of the stored sensor data to a remote entity for offline processing;
evaluate, in accordance with the resource allocation, an output of at least one ADS feature using at least a portion of stored sensor data as input; and
update, in accordance with the resource allocation, at least one ADS feature using at least one portion of the stored data as input.

14. A vehicle (1) comprising:
one or more sensors (6a, 6b, 6c) configured to monitor a surrounding environment of the vehicle (1);
a system (10) according to any one of claims 11 - 13.
